# EUROPEAN PATENT APPLICATION

(11) **EP 3 098 516 A1**
(43) Date of publication of application: **30.11.2016**
(21) Application number: 16160819.5
(22) Date of filing: 17.03.2016
(51) Int. Cl.: F23R 3/28, F23R 3/44, F01D 9/02, F23R 3/00, F23R 3/34

(54) **INJECTION BOSS FOR A UNIBODY COMBUSTOR**

(30) Priority: 24.03.2015 US 201514666358
(71) Applicant: General Electric Company, Schenectady, NY 12345 (US)
(72) Inventor: DICINTIO, Richard Martin, Greenville, SC South Carolina 29615 (US); BAILEY, Donald Mark, Greenville, SC South Carolina 29615 (US); PENTECOST, Ronnie Ray, Greenville, SC South Carolina 29615 (US); NATARAJAN, Jayaprakash, Greenville, SC South Carolina 29615 (US)
(74) Representative: Lee, Brenda

(57) **Abstract**

The present application provides a combustor 25. The combustor includes a unibody liner 58 with a transition piece 54, a fuel injection portion 80, and a fuel injection opening 82. A fuel injection boss may be positioned within the fuel injection opening. The fuel injection boss may be manufactured in a direct metal laser melting process.

## Description

### TECHNICAL FIELD

The present application and the resultant patent relate generally to a gas turbine engine and more particularly relate to a gas turbine engine with an injection boss positioned on or about a transition piece of a unibody combustor liner for low combustion residence times.

### BACKGROUND OF THE INVENTION

A combustion section of a gas turbine engine generally includes a number of combustors arranged in an annular array about a compressor discharge casing. A typical combustor may include an end cover coupled to the compressor discharge casing, an annular cap assembly that extends radially and axially within the compressor discharge casing, an annular liner that extends downstream from the cap assembly, and a transition piece that extends between the liner and a first stage of a turbine section. An aft frame portion of the transition piece may be coupled to the turbine casing for positioning and support.

In an effort to decrease the number of individual components within the combustor of the gas turbine, the transition piece and the combustor liner may be combined into a unibody component. Late lean injectors may be positioned about the unibody liner. Due to limitations in the manufacturing processes, these injectors are currently position upstream of the transition piece. Such positioning, however, may increase the combustion residence time therein.

There is thus a desire for an improved unibody liner for a combustor. Such an improved unibody liner may have increased flexibility in the positioning of the late lean injectors including positioning the injectors about the transition piece so as to provide very low late lean injection residence times for increased performance and lower emissions.

### SUMMARY OF THE INVENTION

The present application and the resultant patent thus provide a combustor. The combustor includes a unibody liner with a transition piece, a fuel injection portion, and a fuel injection opening. A fuel injection boss may be positioned within the fuel injection opening. The fuel injection boss may be manufactured in a direct metal laser melting process.

The present application and the resultant patent further provide a method of manufacturing a combustor with low secondary combustion residence times. The method may include the steps of manufacturing a fuel injection boss in a direct metal laser melting process, positioning a fuel injection opening in a transition piece of a combustor liner, welding the fuel injection boss within the fuel injection opening, and positioning a late lean fuel injector in the fuel injection boss.

The present application and the resultant patent further provide a combustor. The combustor may include a unibody liner with a transition piece, an overlapping fuel injection portion, and a fuel injection opening. A contoured fuel injection boss may be positioned within the fuel injection opening. The contoured fuel injection boss may be manufactured in a direct metal laser melting process.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, and a load.
Fig. 2 is a perspective view of a combustor that may be used with the gas turbine engine of Fig. 1.
Fig. 3 is a side view of a unibody liner that may be used with the combustor of Fig. 2.
Fig. 4 is a perspective view of a unibody liner as may be described herein with a DMLM formed injection boss.
Fig. 5 is a sectional view of the DMLM formed injection boss of Fig. 4.
Fig. 6 is a perspective view of a unibody liner with an injection positioned within the DMLM injector boss.

### DETAILED DESCRIPTION

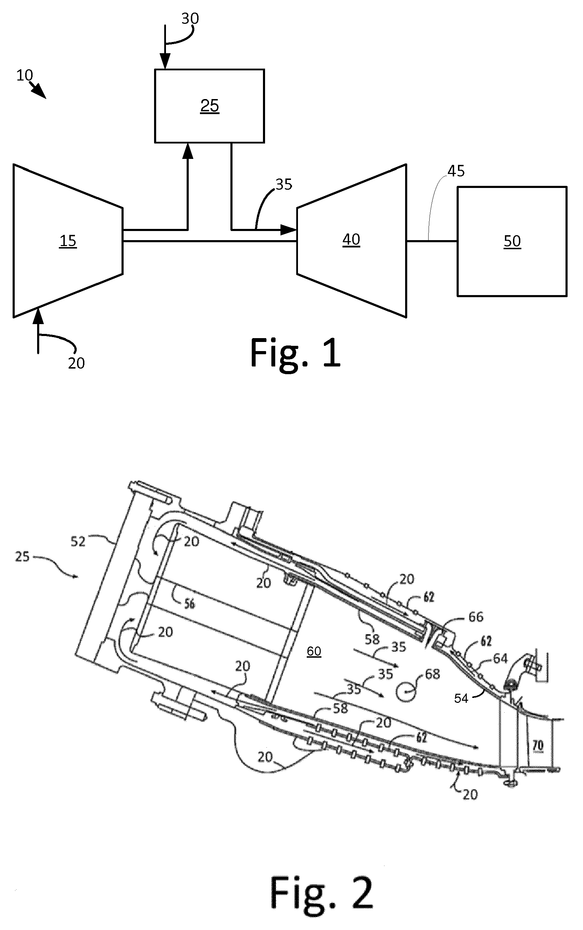

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of the combustors 25 arranged in a circumferential array or otherwise. The flow of combustion gases 35 is delivered in turn to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, liquid fuels, various types of syngas, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

Fig. 2 shows an example of the combustor 25 that may be used with the gas turbine engine 10. Generally described, the combustor 25 may extend from an end cover 52 at a head end to a transition piece 54 at an aft end about the turbine 40. A number of fuel nozzles 56 may be positioned about the end cover 52. A unibody liner 58 may extend from the fuel nozzles 56 towards the transition piece 54. The unibody liner 58 may define a primary combustion zone 60 therein. A flow sleeve 62 may surround the unibody liner 58. The unibody liner 58 and the flow sleeve 62 may define a flow path 64 therebetween for the flow of air 20 from the compressor 15 or from other sources. The combustor 15 also may include one or more late lean fuel injectors 66. The late lean fuel injectors 66 may extend radially through the flow sleeve 62 and the unibody liner 58 about a secondary combustion zone 68. The unibody liner 58 generally terminates about a first stage nozzle 70 of the turbine 40. Other components and other configurations may be used herein.

In use, the flow of air 20 from the compressor 15 may be routed through the flow path 64. A portion of the flow of air 20 may be directed to the head end of the combustor 25 so as to reverse direction and flow through the fuel nozzles 56. The flow of air 20 may be mixed with the flow of fuel 30 in the fuel nozzles 56 such that the air and fuel may be combusted in the primary combustion zone 60. A second portion of the flow of air 20 may be directed through the late lean injectors 66 where the air may be mixed with the fuel and ignited within the secondary combustion zone 68. The flow of the combustion gases 35 from the primary combustion zone 60 and the secondary combustion zone 68 may mix and flow towards the first stage 70 of the turbine 40 so as to produce useful work.

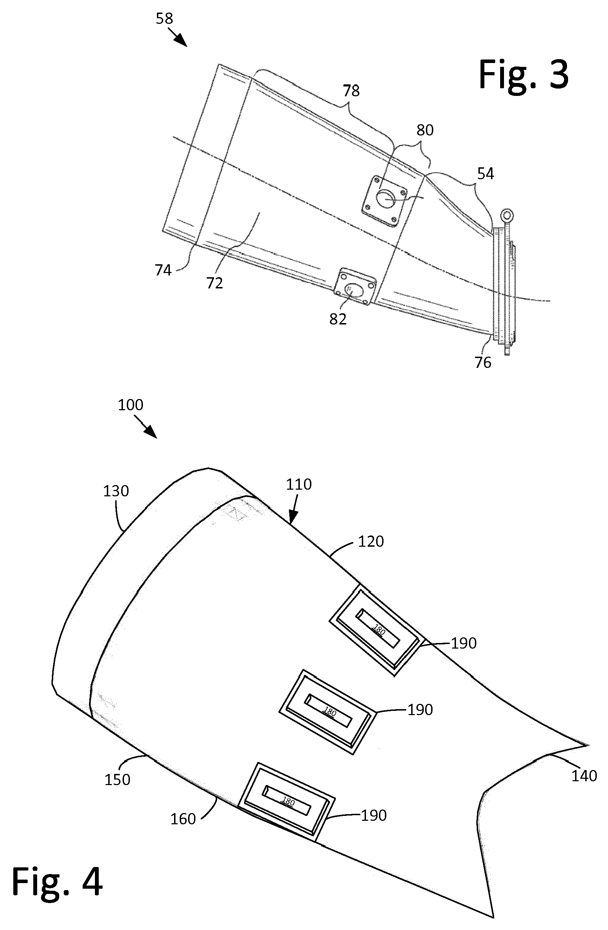

Fig. 3 shows an example of the unibody liner 58. Generally described, the unibody liner 58 may include a main body 72. The main body 72 may have a substantially annular shape. The unibody 72 may include a forward end 74, an aft end 76, a generally conical portion 78, a fuel injection portion 80, and the transition piece 54 described above. The conical portion 78 may extend between the forward end 74 and the fuel injection portion 80. The transition piece 54 generally extends downstream from the fuel injection portion 80 and terminates about the aft end 76. The fuel injection portion 80 generally extends across the secondary combustion zone 68.

The unibody liner 58 may include a number of fuel injection openings 82. The fuel injection openings 82 may be sized to accommodate the late lean fuel injector 66. A number of fuel injection bosses 84 may be positioned about the fuel injection openings 82 so as to position the late lean fuel injector 66 therein. The combustor 25 and the unibody liner 58 described herein are for the purpose of example only. Many other types of combustors and unibody liners may be known.

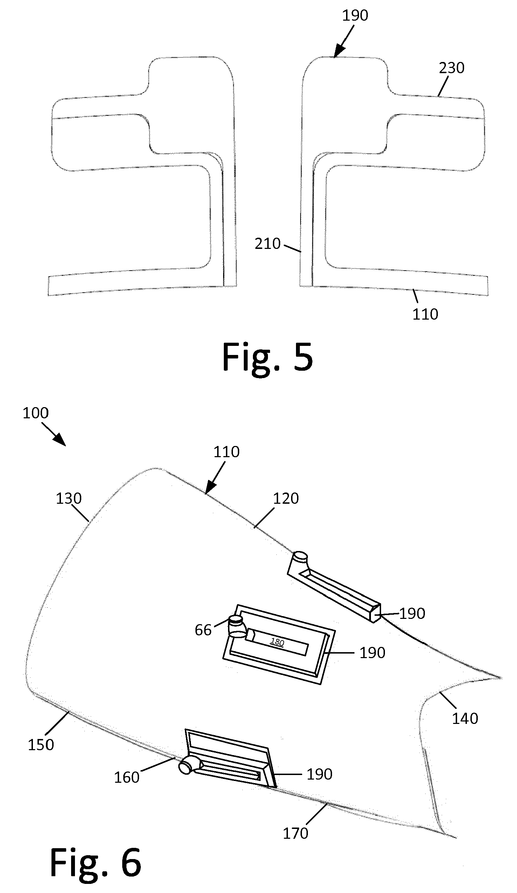

Figs. 4-6 show an example of a portion of a combustor 100 as may be described herein. The combustor 100 may include a unibody liner 110. In a manner similar to that described above, the unibody liner 110 may include a main body 120. The main body 120 may extend from a forward end 130 to an aft end 140. The main body 120 further may include a conical portion 150, a fuel injection portion 160, and a transition piece 170. The conical portion 150 may extend from the forward end 130 towards the fuel injection portion 160. Likewise, the transition portion 170 may extend from the fuel injection portion 160 towards the aft end 140. The fuel injection portion 160 may include one or more fuel injection openings 180. Each of the fuel injection openings 180 may have a fuel injection boss 190 positioned therein. The fuel injection bosses 190 may be welded or otherwise secured within the fuel injection openings 180. A late lean fuel injector 66 and the like may be positioned within the fuel injection boss 190. Other components and other configurations may be used herein.

In this example, the fuel injection portion 160 of the unibody liner 110 may extend into part or all of the transition piece 170. Specifically, the fuel injection bosses 190 may be positioned within the transition piece 170 near the first stage nozzle 70 of the turbine 40. Such positioning may provide low combustion residence times therein given the proximity to the first stage 70 of the turbine 40.

The fuel injection bosses 190 may include a highly contoured shape 200. The contoured shape 200 may include a downward flange 210 extending into the fuel injection opening 180. The downward flange 210 may define an injection boss opening 220 for the late lean fuel injector 66. The fuel injection bosses 190 also may include an outwardly projecting flange 230. The outwardly projecting flange 230 may extend along the flow sleeve 62 for support therewith. The fuel injection bosses 190, and the components thereof, may have any suitable size, shape, or configuration. Other components and other configurations may be used herein.

The fuel injection bosses 190 may be manufactured in a Direct Metal Laser Melting ("DMLM") process. Laser scanning and the DMLM processes may provide the ability to create highly contoured and accurate shapes that may be easily welded to the unibody liner 110, particularly about the transition part 170. This positioning thus provides the very low late lean injection residence times. Moreover, this positioning benefits both single and multiple planes of late lean injection within the overall combustor 100. The use of DMLM thus permits the fuel injection bosses 180 to be positioned anywhere along the unibody liner 110.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following numbered clauses:
1. A combustor, comprising:
   a unibody liner;
   the unibody liner comprising a transition piece, a fuel injection portion, and a fuel injection opening; and
   a fuel injection boss positioned within the fuel injection opening;
   wherein the fuel injection boss is manufactured in a direct metal laser melting process.
2. The combustor of clause 1, wherein the fuel injection portion overlaps the transition piece in whole or in part.
3. The combustor of any preceding clause, wherein the fuel injection opening is positioned within the transition piece.
4. The combustor of any preceding clause, further comprising a plurality of fuel injection openings and fuel injection bosses.
5. The combustor of any preceding clause, wherein the unibody liner comprises a forward end and an aft end.
6. The combustor of any preceding clause, wherein the unibody liner comprises a conical portion about the forward end and the transition piece about the aft end.
7. The combustor of any preceding clause, wherein the transition piece is positioned about a first turbine stage.
8. The combustor of any preceding clause, wherein the fuel injection boss comprises a contoured shape.
9. The combustor of any preceding clause, wherein the fuel injection boss comprises a downward flange and an outwardly extending flange.
10. The combustor of any preceding clause, wherein the downwardly extending flange defines a fuel injection boss opening.
11. The combustor of any preceding clause, further comprising a fuel injector positioned within the fuel injection boss.
12. The combustor of any preceding clause, wherein the fuel injector is positioned about a secondary combustion zone.
13. The combustor of any preceding clause, wherein the fuel injector comprises a late lean fuel injector.
14. The combustor of any preceding clause, further comprising a flow sleeve surrounding the unibody liner and defining a flow path therethrough.
15. A method of manufacturing a combustor with low secondary combustion residence times, comprising:
   manufacturing a fuel injection boss in a direct metal laser melting process;
   positioning a fuel injection opening in a transition piece of a combustor liner;
   welding the fuel injection boss within the fuel injection opening; and
   positioning a late lean fuel injector in the fuel injection boss.
16. A combustor, comprising:
   a unibody liner;
   the unibody liner comprising a transition piece, a fuel injection portion, and a fuel injection opening;
   wherein the fuel injection portion overlaps the transition piece; and
   a contoured fuel injection boss positioned within the fuel injection opening;
   wherein the contoured fuel injection boss is manufactured in a direct metal laser melting process.
17. The combustor of any preceding clause, wherein the fuel injection opening is positioned within the transition piece.
18. The combustor of any preceding clause, further comprising a plurality of fuel injection openings and fuel injection bosses.
19. The combustor of any preceding clause, wherein the fuel injection boss comprises a downward flange, an outwardly extending flange, and wherein the downwardly extending flange defines a fuel injection boss opening.
20. The combustor of any preceding clause, further comprising a fuel injector positioned within the fuel injection boss.

## Claims

1. A combustor, comprising:
a unibody liner;
the unibody liner comprising a transition piece, a fuel injection portion, and a fuel injection opening; and
a fuel injection boss positioned within the fuel injection opening;
wherein the fuel injection boss is manufactured in a direct metal laser melting process.

2. The combustor of claim 1, wherein the fuel injection portion overlaps the transition piece in whole or in part.

3. The combustor of claim 1, wherein the fuel injection opening is positioned within the transition piece.

4. The combustor of claim 1, 2 or 3, further comprising a plurality of fuel injection openings and fuel injection bosses.

5. The combustor of any preceding claim, wherein the unibody liner comprises a forward end and an aft end.

6. The combustor of claim 5, wherein the unibody liner comprises a conical portion about the forward end and the transition piece about the aft end.

7. The combustor of any preceding claim, wherein the transition piece is positioned about a first turbine stage.

8. The combustor of any preceding claim, wherein the fuel injection boss comprises a contoured shape.

9. The combustor of any of claims 1 to 7, wherein the fuel injection boss comprises a downward flange and an outwardly extending flange.

10. The combustor of claim 9, wherein the downwardly extending flange defines a fuel injection boss opening.

11. The combustor of any preceding claim, further comprising a fuel injector positioned within the fuel injection boss.

12. The combustor of claim 11, wherein the fuel injector is positioned about a secondary combustion zone.

13. The combustor of claim 11, wherein the fuel injector comprises a late lean fuel injector.

14. The combustor of any preceding claim, further comprising a flow sleeve surrounding the unibody liner and defining a flow path therethrough.

15. A method of manufacturing a combustor with low secondary combustion residence times, comprising:
manufacturing a fuel injection boss in a direct metal laser melting process;
positioning a fuel injection opening in a transition piece of a combustor liner;
welding the fuel injection boss within the fuel injection opening; and
positioning a late lean fuel injector in the fuel injection boss.
